# EUROPEAN PATENT SPECIFICATION

(11) **EP 1 183 090 B1**
(45) Date of publication and mention of the grant of the patent: **27.08.2003**
(21) Application number: 00935297.2
(22) Date of filing: 26.05.2000
(51) Int. Cl.: B01D 53/94, F01N 3/08

(54) **Method of operating an internal combustion engine**
Verfahren zur Steuerung einer Brennkraftmschine
Méthode d'opération d'un moteur à combustion interne

(30) Priority: 29.05.1999 GB 9912542
(43) Date of publication of application: 06.03.2002
(73) Proprietor: Ford Global Technologies, Inc., Dearborn, Michigan 48136 (US)
(72) Inventor: EVES, Brian, Essex SS7 3SQ (GB); TAYLOR, Trevor, Essex SS16 5JS (GB); MARSHALL, Robert, Essex CM7 5BA (GB)
(74) Representative: Messulam, Alec Moses
(86) International application number: GB0001952
(87) International publication number: WO00072946

(56) References cited:
- EP-A- 0 911 499
- WO-A-98/46868

## Description

### Field of the invention

The present invention relates to a method of operating an internal combustion engine that is capable of operating in a lean burn mode and that has in its exhaust system a NOX trap containing materials which absorb NOx produced during lean burn operation, in which method the NOx trap is intermittently subjected to purging operations to remove NOx stored in the trap.

### Background of the invention

Running a direct injection gasoline engine at air/fuel ratios of the order of 20 to 1 or more allows substantial increases in economy at part load operations. For a given part load economy is improved compared to stoichiometric operation by using more open throttle and increased air/fuel ratio. This is due to reduced pumping losses. When higher power is required the engine management system provides fuel injection for stoichiometric operation. It is a problem with lean burn engines of this kind that during lean burn operation, the gases entering the after-treatment system (feed-gases) contain NOx in an oxidising environment. NOx can be reduced to harmless nitrogen, carbon dioxide and water in a three-way catalytic converter but during lean burn operations the near stoichiometric conditions necessary for the effective operation of the three-way catalyst are not present and further measures are needed to reduce NOx emissions to an acceptable level.

In this specification, we refer to lean fuelling and to rich fuelling. Unless otherwise stated, this means lean of stoichiometric or rich of stoichiometric.

US Patent No. 5,437,153 describes an engine with a NOx trap. During lean burn operation the NOx trap absorbs NOx. After a limited period of lean fuelling, the NOx trap's capacity to absorb NOx declines. The engine management system then switches to a purge mode in which, for a short time, of the order of a few seconds, the engine is run somewhat richer than stoichiometric. During the purge operation reducing gases including hydrogen and carbon monoxide are present in the gases entering the NOx trap causing conversion of the absorbed NOx into nitrogen, carbon dioxide and water. After the short purge period, the engine can return to lean fuelling.

### Summary of the invention

According to the present invention, there is provided a method of operating an internal combustion engine that is capable of operating in a lean burn mode and that has in its exhaust system a NOX trap containing materials which absorb NOx produced during lean burn operation, in which method the NOx trap is intermittently subjected to purging operations to remove NOx stored in the trap, each NOx purging operation including a plurality of periods of alternate rich and lean fuelling, each period of rich fuelling being shorter than that required to purge NOx fully from the NOx trap.

The invention is predicated upon the discovery that several short periods of rich fuelling alternating with lean fuelling provide a much improved purge of the NOx trap than a single period of rich fuelling of similar overall duration. Lower tailpipe emissions of CO are combined with a small but worthwhile reduction of fuel used for the purge operation. The storage capacity of the trap following the improved purge in accordance with the invention may improved by up to 50 % allowing longer periods between purge operations for any given operating conditions.

The reasons for the improvements are not fully understood but it is believed that the first short period of rich fuelling deals with a layer of absorbed NOx near the surface of the trap material. A short pause in the purge operation allows absorbed NOx from deeper layers to migrate to the surface where they are ready for rapid reduction at the next short period of rich fuelling.

Engines have been operated with alternating rich and lean fuelling in the past for other purposes.

WO-A-98.46868 describes a method for purging of a NOₓ-trap in an exhaust gas system of an internal combustion engine. The engine management system periodically purges the NOₓ from the NOₓ-trap by allowing a fuel spike. To heat the NOx-trap sufficiently in order to regenerate it after sulphur poisoning, the air/fuel ratio is intentionally modulated with an amplitude of the order of 0.1 lambda. In the sulphur purge mode, the average value of the air/fuel ratio should be stoichiometric to avoid undesired engine emissions. The sulphur purge operation thus includes a plurality of cycles of alternate rich and lean fuelling.

### Brief description of the drawings

The invention will now be described further, by way of example, with reference to the accompanying drawing, in which
Figure 1 is a block diagram of a lean burn spark ignition direct injection internal combustion engine fitted with a three-way catalyst, a NOx trap and a management system that regulates the timing and quantity of fuel supplied to the cylinders, and the ignition timing of the engine;
Figure 2 is a chart showing fuelling of the engine in terms of λ plotted against time during a conventional NOx trap purge operation;
Figure 3 is a chart showing tailpipe NOx (solid line) and tailpipe CO (dotted line) for the same conventional purge operation as shown in Figure 2, over the same time period;
Figure 4 is a chart showing fuelling of the engine in terms of X plotted against time during a NOx trap purge operation in accordance with the invention; and
Figure 5 is a chart showing tailpipe NOx (solid line) and tailpipe CO (dotted line) for the same purge operation of the invention as shown in Figure 4, over the same time period.

### Detailed description of the preferred embodiments

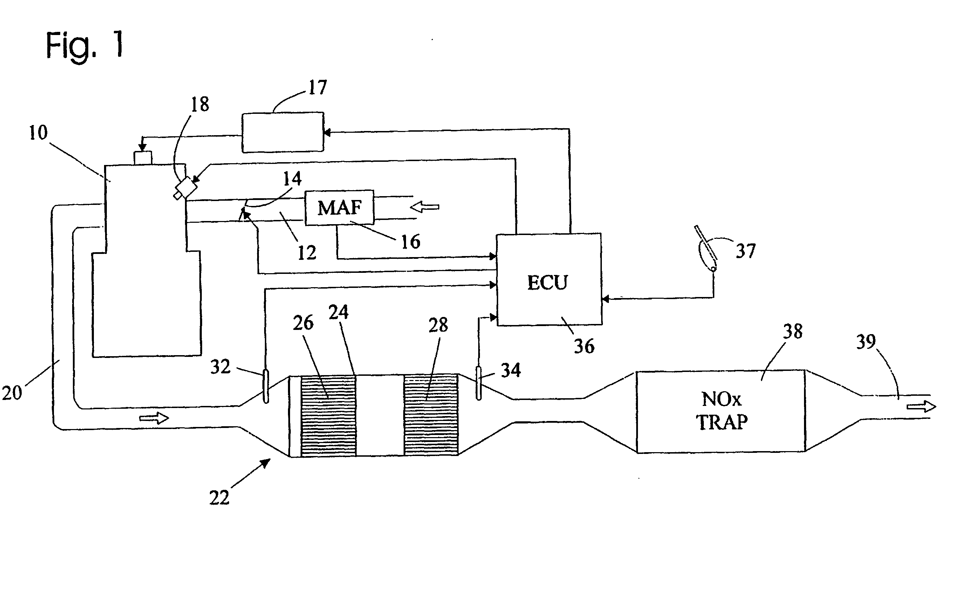

In Figure 1, an engine 10 has an inlet manifold 12 into which ambient air enters by way of a mass air flow meter 16. The intake air flow is controlled by a main butterfly throttle 14 and fuel is injected directly into a cylinder (not shown) through a fuel injector 18. The exhaust air flows through a down pipe 20 to a catalytic converter 22 that comprises two matrices 26 and 28 arranged in a casing 24. The matrices or bricks 26 and 28 consist of a ceramic honeycomb carrying particles of a three-way catalyst.

In order to minimise tailpipe emissions of NOx, hydrocarbons and carbon monoxide when full power is required from the engine, the engine air to fuel ratio (AFR) is oscillated about stoichiometry (λ = 1). This is achieved by means an electronic control unit (ECU) 36 that receives signals from a driver's demand pedal 37, two exhaust gas oxygen (EGO) sensors 32 and 34 located upstream and downstream of the catalytic converter 22, respectively, and from the mass air flow meter 16, sets the position of throttle 14, sets ignition timing via module 17 calculates the appropriate injection quantity on the basis of stored data and algorithms and controls the fuel injectors 18 to deliver the calculated quantity of fuel to the engine cylinders.

If the pedal 37 is not fully depressed and the demanded power can be met with lean fuelling, the engine management system switches to lean burn operation (λ typically in the range 1.25 to 2.0) with throttle 14 further open under the control of ECU 36 than would be the case for similar power at λ = 1, thereby reducing fuel consumption. During lean fuelling, NOx gases pass through the three-way catalyst 24 to a NOx trap 38.

The NOx trap typically comprises barium carbonate (BaCO₃) in the presence of a platinum (Pt) catalyst on a ceramic honeycomb substrate. In an oxidising environment characteristic of lean burn operation, NOx and oxygen combine with the barium carbonate to give barium nitrate and carbon dioxide.

The ECU 36 calculates from engine speed, load and time when the capacity of the NOx trap to absorb NOx in this way is nearing exhaustion. The ECU then initiates purge operation in which rich fuelling is used to create reducing conditions in the trap 37. At each transition between lean and rich fuelling, the ECU adjusts the throttle and/or ignition timing to minimise engine torque variations. During rich fuelling CO, HC and H₂ combine with barium nitrate in the trap in the presence of a rhodium catalyst to give harmless N₂ and CO₂.

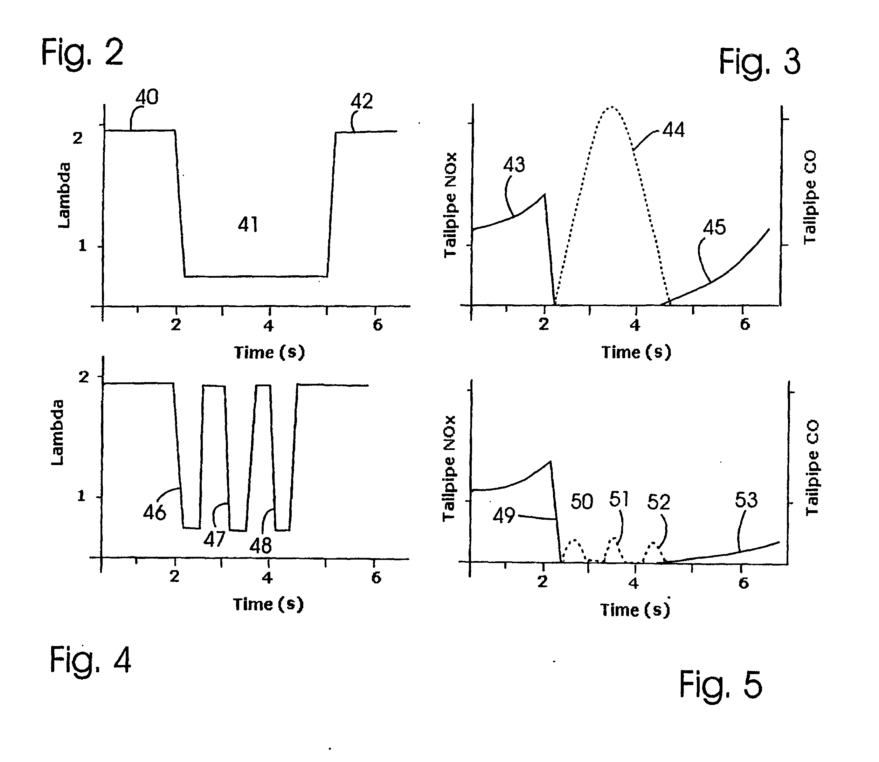

A conventional purge operation is illustrated in Figure 2. Lean fuelling 40 is followed by a single uninterrupted period of rich fuelling 41 of duration typically between about 2 and 20 seconds duration, followed by a return to lean fuelling 42. The duration of the purge operation depends upon mass flow though the engine. Longer periods are required at low loads and low speeds. Shorter periods are sufficient if the engine load and speed is higher. The effect of the purge operation on NOx and CO measured at tailpipe 39 can be seen in Figure 3. NOx can be seen to be increasing at the end of lean burn operation 43 due to saturation of the capacity of the trap. Upon initiation of the purge operation by the ECU 36, tailpipe emissions of NOx fall to negligible amounts due to the effective operation of the three-way catalyst at rich and near stoichiometric fuelling. During the purge operation some CO (shown at 44) is emitted from the tailpipe as a result of the rich fuelling. Upon resumption of lean burn, NOx emissions have fallen back and gradually increase (shown at 45) as the trap again begins to fill.

It has now been discovered that purging of the trap can be carried out more efficiently and with reduced tailpipe emissions by replacing the single continuous period of rich fuelling with multiple short periods of alternating rich and lean fuelling of about the same overall duration as would be needed to purge the trap with a single continuous rich fuelling period. This is illustrated in Figure 4. In this example, fuelling is cycled 3 times between lean and rich with a cycle time of about 1 second duration (46, 47, 48). The effects of this can be seen in Figure 5. NOx falls as before (49), and each period of rich fuelling results in some CO tailpipe emissions (50, 51, 52). NOx absorption is fully restored as seen at 53.

The cycle time for rich and lean fuelling during the purge operation should between half a second and 2 seconds, preferably about one second duration. Preferred values for cycle times, periods of lean and rich fuelling and air fuel ratio are found in the dependent claims.

The number of cycles of rich and lean fuelling required for effective purging of the NOx trap varies from 1 to about 10 cycles, depending on the load and speed of the engine, more cycles being required at lower loads and speeds. The ECU contains data mapping cycles or overall purge duration against speed and load and applies an appropriate number of cycles based on operating conditions.

The advantages of the improved purge operation of the invention can be clearly seen from the comparison of Figures 4 and 5 with the corresponding charts for conventional purge operation in Figures 2 and 3. The area above the fuelling curves in Figures 2 and 4 represents the total fuel used to purge the trap. A significant reduction can be seen. The area below the curves in Figures 3 and 5 represents tailpipe emissions. A significant reduction of tailpipe CO can be seen. Of even greater significance is the slope of the NOx emissions curve following the purge operation which can be seen to show a more rapid increase for conventional purge 45 than for multiple purge 53. This indicates that the purging of NOx from the trap is more complete and that the storage capacity of the trap is more fully restored. Intervals between purges, which depend on engine load and speed, can be increased, typically by as much as 50%.

## Claims

1. A method of operating an internal combustion engine (10) that is capable of operatin in a lean burn mode and that has in its exhaust system a NOx trap (38) containing materials which absorb NOx produced during lean burn operation, in which method the NOx trap (38) is intermittently subjected to purging operations to remove NOx stored in the trap, and each NOx purging operation includes a plurality of periods of alternate rich and lean fuelling, **characterised in that** each period of rich fuelling is shorter than that required to purge NOx fully from the NOx trap (38).

2. A method as claimed in claim 1 in which the number of cycles in each purge operation is selected for different engine load and speed in accordance with stored data, more cycles being applied for lower loads and speeds.

3. A method as claimed in claim 1 or claim 2, in which the cycle time is between one half and two seconds.

4. A method as claimed in claim 3, in which the cycle time is about one second.

5. A method as claimed in claim 1, in which the periods of rich fuelling in each purge operation are of less than one second duration.

6. A method as claimed in claim 5, in which the periods of rich fuelling in each purge operation are of about half a second duration.

7. A method as claimed in any one of the preceding claims in which the periods of lean fuelling in each purge operation are of less than 2 seconds duration.

8. A method as claimed in claim 7, in which the periods of lean fuelling in each purge operation are about half a second duration.

9. A method as claimed in any one of the preceding claims, in which the air/fuel ratio for rich fuelling in purge operation is approximately 10 to 1 (λ = 0.7).

10. A method as claimed in any one of the preceding claims, in which the air/fuel ratio for lean fuelling in purge operation is greater than 17 to 1 (λ = 1.25).

11. A method as claimed in any one of the preceding claims for a spark ignition internal combustion engine, wherein the throttle opening is reduced and/or the ignition is retarded to reduce torque variations during each period of rich fuelling.

## Patentansprüche

1. Ein Verfahren des Betriebs eines Verbrennungsmotors (10), der in der Lage ist in einem Magerverbrennungs-Modus zu arbeiten und der in seinem Abgassystem eine NOₓ-Falle (38) besitzt, die Materialien enthält welche während einem Magerverbrennungs-Betrieb erzeugtes NOₓ absorbieren; in welchem Verfahren die NOₓ-Falle (38) periodisch Spüloperationen ausgesetzt ist, um in der Falle gespeichertes NOₓ zu entfernen; und wobei jede NOₓ-Spüloperation eine Mehrzahl von Zeitdauern abwechselnd fetter und magerer Kraftstoffversorgung einschließt; **dadurch gekennzeichnet daß** jede Zeitdauer fetter Kraftstoffversorgung kürzer ist als jene die erforderlich ist um NOₓ vollständig von der NOₓ-Falle zu spülen.

2. Ein Verfahren gemäß Anspruch 1, in welchem die Anzahl an Zyklen in jeder Spüloperation für verschiedene Motorlast und -drehzahl gemäß gespeicherter Daten ausgewählt wird, wobei für niedrigere Lasten und Drehzahlen mehr Zyklen angewandt werden.

3. Ein Verfahren gemäß Anspruch 1 oder 2, on welchem die Zykluszeit zwischen einer halben und zwei Sekunden beträgt.

4. Ein Verfahren gemäß Anspruch 3, in welchem die Zykluszeit ungefähr eine Sekunde beträgt.

5. Ein Verfahren gemäß Anspruch 1, in welchem die Zeitdauern fetter Kraftstoffversorgung in jeder Spüloperation von weniger als einer Sekunde Dauer sind.

6. Ein Verfahren gemäß Anspruch 5, in welchem die Zeitdauern fetter Kraftstoffversorgung in jeder Spüloperation von ungefähr einer halben Sekunde Dauer sind.

7. Ein Verfahren gemäß einem der vorstehenden Ansprüche, in welchem die Zeitdauern der mageren Kraftstoffversorgung in jeder Spüloperation von weniger als 2 Sekunden Dauer ist.

8. Ein Verfahren gemäß Anspruch 7, in welchem die Zeitdauern der mageren Kraftstoffversorgung in jeder Spüloperation von ungefähr einer halben Sekunde Dauer sind.

9. Ein Verfahren gemäß einem der vorstehenden Ansprüche, in welchem das Luft/Kraftstoff-Verhältnis für fette Kraftstoffversorgung im Spülbetrieb ungefähr 10 zu 1 beträgt (λ = 0,7).

10. Ein Verfahren gemäß einem der vorstehenden Ansprüche, in welchem das Luft/Kraftstoff-Verhältnis für magere Kraftstoffversorgung im Spülbetrieb größer als 17 zu 1 ist (λ = 1,25).

11. Ein Verfahren gemäß einem der vorstehenden Ansprüche für Funkenzündungs-Verbrennungsmotoren, in dem die Drosselöffnung vermindert und/oder die Zündung verzögert wird, um Drehmomentvariationen während jeder Zeitdauer der fetten Kraftstoffversorgung zu vermindern.

## Revendications

1. Procédé de mise en oeuvre d'un moteur à combustion interne (10) qui est capable de fonctionner dans un mode à combustion pauvre et qui comporte dans son système d'échappement un piège à NOx (38) contenant des matériaux qui absorbent le NOx produit durant le fonctionnement en combustion pauvre, procédé dans lequel le piège à NOx (38) est soumis par intermittence à des opérations de purge pour éliminer le NOx stocké dans le piège, et chaque opération de purge de NOx comprend une pluralité de périodes d'alimentation en carburant riche et pauvre alternées, **caractérisé en ce que** chaque période d'alimentation en carburant riche est plus courte que celle requise pour purger complètement le NOx du piège à NOx (38).

2. Procédé selon la revendication 1, dans lequel le nombre des cycles de chaque opération de purge est sélectionné pour une charge et un régime différents du moteur conformément à des données mémorisées, davantage de cycles étant appliqués pour des charges et des régimes plus bas.

3. Procédé selon la revendication 1 ou la revendication 2, dans lequel le temps de cycle est entre une demi-seconde et deux secondes.

4. Procédé selon la revendication 3, dans lequel le temps de cycle est d'environ une seconde.

5. Procédé selon la revendication 1, dans lequel les périodes d'alimentation en carburant riche de chaque opération de purge durent moins d'une seconde.

6. Procédé selon la revendication 5, dans lequel les périodes d'alimentation en carburant riche de chaque opération de purge durent environ une demi-seconde.

7. Procédé selon l'une quelconque des revendications précédentes, dans lequel les périodes d'alimentation en carburant pauvre de chaque opération de purge durent moins de 2 secondes.

8. Procédé selon la revendication 7, dans lequel les périodes d'alimentation en carburant pauvre de chaque opération de purge durent environ une demi-seconde.

9. Procédé selon l'une quelconque des revendications précédentes, dans lequel le rapport air/carburant pour une alimentation en carburant riche dans l'opération de purge est approximativement de 10 sur 1 (λ = 0,7).

10. Procédé selon l'une quelconque des revendications précédentes, dans lequel le rapport air/carburant pour une alimentation en carburant pauvre dans l'opération de purge est supérieur à 17 sur 1 (λ = 1,25).

11. Procédé selon l'une quelconque des revendications précédentes pour un moteur à combustion interne à allumage par étincelle, dans lequel l'ouverture du papillon des gaz est réduite et/ou l'allumage est retardé pour réduire les variations du couple durant chaque période d'alimentation en carburant riche.
